# EUROPEAN PATENT APPLICATION

(11) **EP 3 425 504 A1**
(43) Date of publication of application: **09.01.2019**
(21) Application number: 17759701.0
(22) Date of filing: 20.02.2017
(51) Int. Cl.: G06F 11/00, G06F 9/445

(54) **TERMINAL DEVICE AND SOFTWARE REWRITING PROGRAM**

(30) Priority: 01.03.2016 JP 2016038929
(71) Applicant: Yanmar Co., Ltd., Osaka-shi, Osaka 530-8311 (JP)
(72) Inventor: ISHIMOTO, Shintaro, Osaka-shi Osaka 530-8311 (JP); KOJIMA, Yusuke, Osaka-shi Osaka 530-8311 (JP); MATSUO, Masaki, Osaka-shi Osaka 530-8311 (JP); YAMASHITA, Shunzo, Osaka-shi Osaka 530-8311 (JP)
(74) Representative: Hinkelmann, Klaus
(86) International application number: PCT/JP2017/006057
(87) International publication number: WO 2017/150233

(57) **Abstract**

A terminal device for use in a software rewriting system configured to rewrite a software package of a control device transmits an updating software package for updating the software package of the control device to the control device when a turn-off operation for turning off the power source of the control device is conducted.

## Description

### Technical Field

The present invention relates to a terminal device and a software rewriting program for use in a software rewriting system configured to rewrite a software package of a control device (e.g., control device mounted in a movable object such as work machine or a ship).

### Background Art

As a software rewriting system for rewriting a software package of a control device, there is one, for example, which rewrites the software package of the control device based on an updating software package.

### Citation List

### Patent Literature

PTL 1: Japanese Patent No. 4234062

### Summary of Invention

### Technical Problem

Such a software rewriting system is not able to rewrite the software package of the control device while the control device is in an active state (i.e., the while the software package is in operation), because the software package of the control device is operating.

In this regard, Patent Literature 1 (hereinafter, PTL 1) discloses a structure of selecting timings of notification or processing related to updating of the software package based on the priority, when the software package is updatable.

However, the structure of PTL 1 needs to have a user to select whether to rewrite the software package, every time the software package of the control device is rewritten. That is, it is necessary to have the user intentionally make an operation for rewriting the software package, which is not convenient at a time of rewriting the software package of the control device.

In view of the above, it is an object of the present invention to provide a terminal device and a software rewriting program for use in a software rewriting system configured to rewrite a software package of a control device and software rewriting program, which can reliably rewrite a software package of a control device mounted on a movable object, without having a user intentionally make an operation of rewriting the software package every time the software package is to be rewritten, thereby enabling an improvement in the convenience at a time of rewriting the software package.

### Solution to Problem

To achieve the above object, an aspect of the present invention provides a terminal device and software rewriting program as described below.

### (1) Terminal device

A terminal device related to an aspect of the present invention is a terminal device for use in a software rewriting system configured to rewrite a software package of a control device, such that an updating software package for updating the software package of the control device is transmitted to the control device, when a turn-off operation for powering off the control device is conducted.

### (2) Software rewriting program

A software rewriting program related to an aspect of the present invention is a software rewriting program of a terminal device for use in a software rewriting system configured to rewrite a software package of a control device mounted on a movable object, wherein the terminal device includes a computer, and the software rewriting program causes the computer to execute steps including: a transmission control step of transmitting an updating software package for updating the software package of the control device to the control device, when a turn-off operation for powering off the control device is conducted; and
The terminal device of the above-described aspect of the present invention may be such that the software package of the control device is rewritten with the updating software package having been transmitted to the control device. A software rewriting program of the above-described aspect of the present invention may be configured so as to cause the computer to execute the steps further including: a rewriting control step of rewriting the software package of the control device with the updating software package having been transmitted to the control device.

The terminal device of the above-described aspect of the present invention may be such that even when the turn-off operation is conducted, a power source of the control device is maintained in an ON-state until the updating software package is transmitted to the control device, and the power of the control device is turned off upon completion of the transmission of the software package to the control device. A software rewriting program of the above-described aspect of the present invention may be configured so as to cause the computer to execute the steps further including: a power source control step of maintaining a power source of the control device in an ON-state, even when the turn-off operation is conducted, until the updating software package is transmitted to the control device, and turning off the power of the control device upon completion of the transmission of the software package to the control device.

The terminal device of the above-described aspect of the present invention may include a communication unit configured to perform communication with a server managing the software package of the control device, wherein the software package is received from the server via the communication unit. A software rewriting program of the above-described aspect of the present invention may be such that the terminal device includes a communication unit configured to perform communication with a server managing the software package of the control device, and the program causes the computer to execute the steps further including a reception control step of receiving the updating software package from the server via the communication unit.

The terminal device of the above-described aspect of the present invention may be such that a digital certificate for the updating software package is received from the server by using the communication unit, whether the updating software package is an authorized package is checked with the digital certificate, and notification informing a failure in rewriting the software package of the control device is transmitted to the server by using the communication unit, if the updating software package is determined as not to be authentic. A software rewriting program of the above-described aspect of the present invention may be configured so as to cause the computer to execute the steps further including: a reception control step of receiving a digital certificate for the updating software package from the server by using the communication unit; an authentication control step of checking whether the updating software package is an authentic package based on the digital certificate; a notification control step of transmitting notification informing a failure in rewriting the software package of the control device to the server by using the communication unit, if the updating software package is determined as not to be authentic.

The terminal device of the above-described aspect of the present invention may be such that the digital certificate of the updating software package is received from the server by using the communication unit while the power of the control device is in an ON-state, and the digital certificate is deleted when the power of the control device is turned off. A software rewriting program of the above-described aspect of the present invention may be such that, in the reception control step, the digital certificate of the updating software package is received from the server by using the communication unit while the power of the control device is in an ON-state, and the terminal device deletes the digital certificate when the power of the control device is turned off.

The terminal device of the above-described aspect of the present invention may be such that whether or not the software package of the control device updated by the updating software package operates properly is tested, and if the software package updated by the updating software package does not properly operate in the control device, notification informing a failure in rewriting the software package of the control device is transmitted to the server by using the communication unit. A software rewriting program of the above-described aspect of the present invention may be such that, cause the computer to execute the steps further including: a notification control step of testing whether or not the software package of the control device updated by the updating software package operates properly, and transmitting notification informing a failure in rewriting the software package of the control device to the server by using the communication unit, if the software package updated by the updating software package does not properly operate in the control device.

The terminal device and the software rewriting program of the above-described aspects of the present invention may be such that the control device is mounted in a movable object.

The terminal device of the above-described aspect of the present invention may be such that the terminal device is provided in the movable object, and includes a short-range wireless communication unit configured to perform communication with at least one other movable object different from the movable object, via a short-range wireless communication network. When a turn-off operation for powering off the control device is conducted, the updating software package is transmitted to the control device of an own movable object and/or is transmitted to the at least one other movable object via the short-range wireless communication unit and the short-range wireless communication network. A software rewriting program of the above-described aspect of the present invention may be such that, the terminal device is provided in the movable object, and includes a short-range wireless communication unit configured to perform communication with at least one other movable object different from the movable object, via a short-range wireless communication network. In the transmission control step, when a turn-off operation for powering off the control device is conducted, the updating software package is transmitted to the control of an own movable object device and/or is transmitted to the at least one other movable object via the short-range wireless communication unit and the short-range wireless communication network.

The terminal device of the above-described aspect of the present invention may be such that the control device is mounted in an electric device, and the terminal device functions as a multi-function portable communication terminal device and includes a short-range wireless communication unit configured to perform communication with the electric device via the short-range wireless communication network. The electric device is configured to transmit, to the terminal device, turn-off information which indicates that a turn-off operation for powering off the control device has taken place. The terminal device transmits the updating software package to the electric device via the short-range wireless communication unit and the short-range wireless communication network, when the turn-off information is received from the electric device via the short-range wireless communication unit and the short-range wireless communication network. A software rewriting program of the above-described aspect of the present invention may be as follows. The terminal device functions as a multi-function portable communication terminal device, and includes a short-range wireless communication unit configured to perform communication with the electric device via the short-range wireless communication unit and the short-range wireless communication network. The electric device is configured to transmit, to the terminal device, turn-off information which indicates that a turn-off operation for powering off the control device has taken place. The software rewriting program causes the computer to execute the steps including: a reception control step of receiving the turn-off information from the electric device via the short-range wireless communication network and the short-range wireless communication unit. In the transmission control step, the updating software package is transmitted to the electric device via the short-range wireless communication unit and the short-range wireless communication network, when the turn-off information is received in the reception control step.

### Advantageous Effects of Invention

The above aspects of the present invention can eliminate the need for having a user intentionally make an operation of rewriting the software package every time the software package is to be rewritten, thereby enabling an improvement in the convenience at a time of rewriting the software package of the control device.

### Brief Description of Drawings

FIG. 1 is a structural diagram schematically showing an exemplary software rewriting system related to a first embodiment, and provides a schematic view of a state where a dedicated terminal device provided to a movable object out of a plurality of movable objects which could serve as a distribution source is communicating with a server via a wide area network.
FIG. 2 is a schematic view showing a state where the dedicated terminal device having communicated with the server is communicating, via the short-range wireless communication network, with another dedicated terminal device that could serve as a distribution source, in the software rewriting system shown in FIG. 1.
FIG. 3 is a schematic view showing a state where the dedicated terminal device having communicated with the server is communicating, via the short-range wireless communication network, with another dedicated terminal device that does not substantially serve as a distribution source, in the software rewriting system shown in FIG. 1.
FIG. 4 is a block diagram showing an exemplary software configuration of the dedicated terminal device shown in FIG. 1 to FIG. 3.
FIG. 5 is a structural diagram schematically showing an example software rewriting system related to a second embodiment, and provides a schematic view of a state where a general-use terminal device is communicating with a server via a wide area network.
FIG. 6 is a schematic view showing a state where the general-use terminal device having communicated with the server is communicating, via a short-range wireless communication network, with a dedicated terminal device that could serve as a distribution source, in the software rewriting system shown in FIG. 5.
FIG. 7 is a schematic view showing a state where the general-use terminal device having communicated with the server is communicating, via a short-range wireless communication network, with a dedicated terminal device that does not substantially serve as a distribution source, in the software rewriting system shown in FIG. 5.
FIG. 8 is a block diagram showing an exemplary software configuration of the general-use terminal device shown in FIG. 5 to FIG. 7.
FIG. 9 is an operation chart showing an exemplary software rewriting operation of the software rewriting system shown in FIG. 1 to FIG. 4.
FIG. 10 is a flowchart showing an exemplary software rewriting process of the software rewriting system shown in FIG. 9.

### Description of Embodiments

The following describes embodiments related to the present invention with reference to attached drawings. The following description deals with examples where the movable object, which is an example of the electric device, is an agricultural work machine such as a combine harvester, a tiller, a rice transplanter, and the like.

### [First Embodiment]

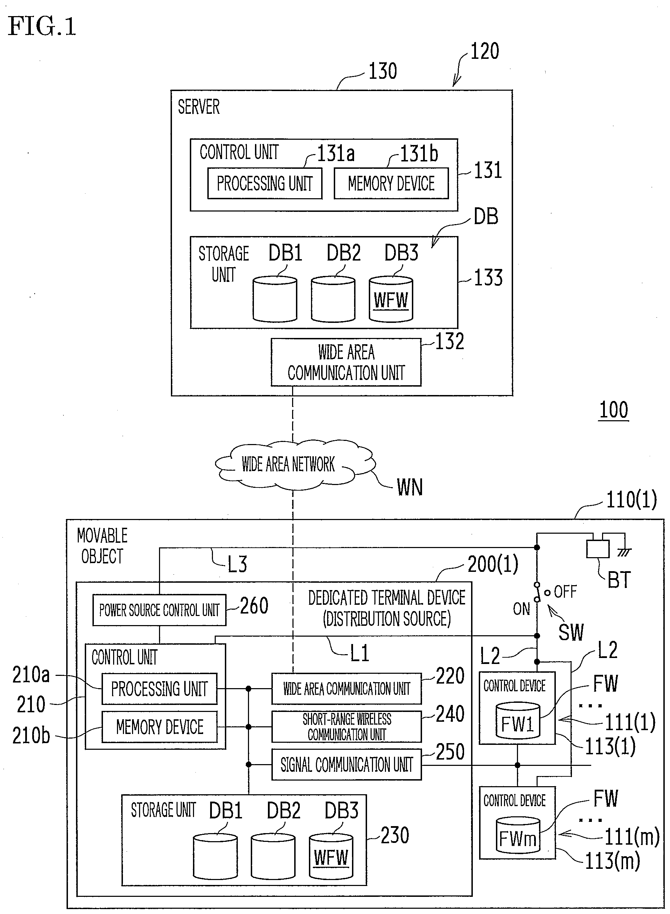

FIG. 1 to FIG. 3 are structural view schematically showing an exemplary software rewriting system 100 related to a first embodiment.

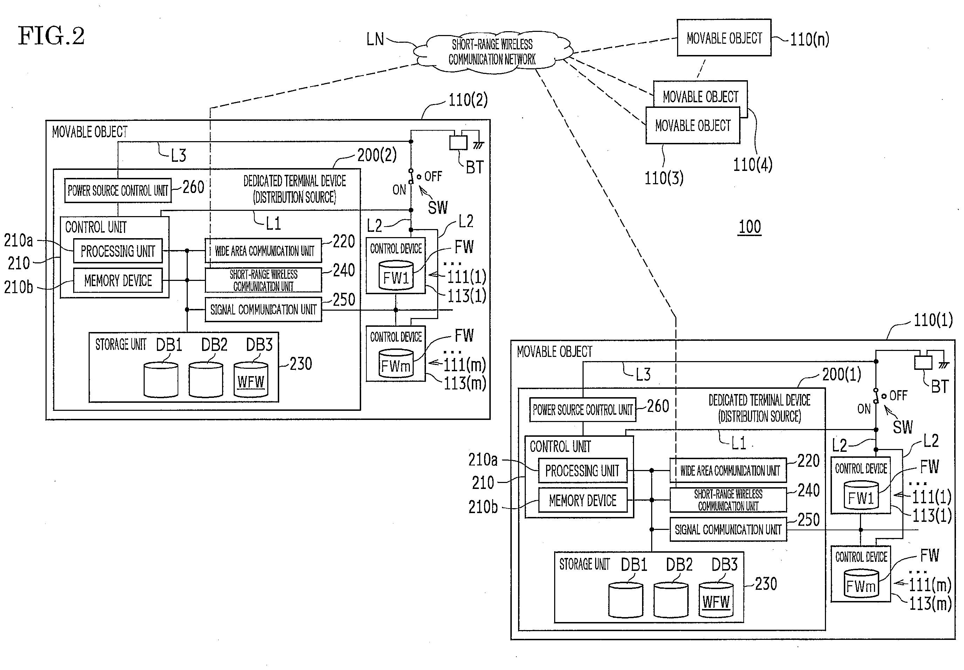

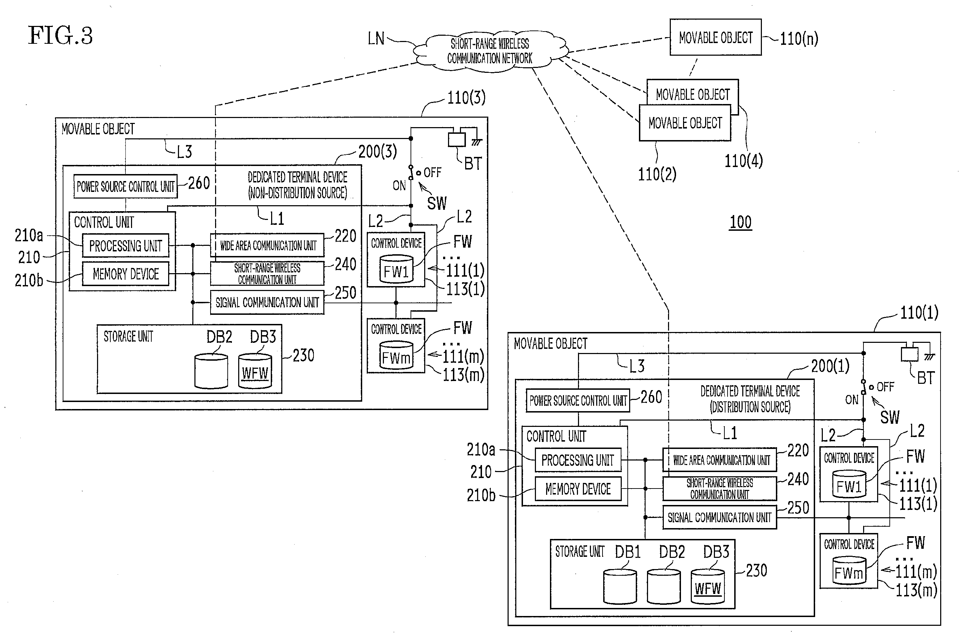

FIG. 1 is a schematic view showing a state where a dedicated terminal device 200(1) provided to a movable object 110(1) that could serve as a distribution source, out of a plurality of movable objects 110(1) to 110(n) (where n is an integer of 2 or more), is communicating with a server 130 via a wide area network WN. FIG. 2 is a schematic view showing a state where the dedicated terminal device 200(1) having communicated with the server 130 is communicating, via a short-range wireless communication network LN, with another dedicated terminal device 200 (2) that could serve as a distribution source, in the software rewriting system 100 shown in FIG. 1. FIG. 3 is a schematic view showing a state where the dedicated terminal device 200 (1) having communicated with the server 130 is communicating, via the short-range wireless communication network LN, with another dedicated terminal device 200 (3) that does not substantially serve as a distribution source, in the software rewriting system 100 shown in FIG. 1.

The software rewriting system 100 shown in FIG. 1 to FIG. 3 is a system for rewriting software packages FW (FW1 to FWm) of control devices 113(1) to 113(m) (where m is an integer of 1 or 2 or more) mounted in a plurality of movable objects 110(1) to 110(n) (e.g., movable work machines, ships) (see FIG. 1 to FIG. 3). In this example, the control devices 113(1) to 113(m) are electronic control units (Electronic Control Units: ECUs), and are mounted in the movable objects 110(1) to 110(n). The software package FW is firmware.

The software rewriting system 100 includes: the plurality of movable objects 110(1) to 110(n), the dedicated terminal devices 200(1) to 200(n) provided to the plurality of movable objects 110(1) to 110(n), and the server 130 (see FIG. 1) connected to the dedicated terminal devices 200(1) to 200(n) via a wide area network WN (see FIG. 1).

In this example, the server 130 is a large information device (specifically stationary computer installed in a predetermined location). However, the server 130 is not limited to this, and may be information devices capable of storing the updating software database DB, e.g., a small information device having a storage unit with a sufficient capacity for the data size needed for the updating software database DB, more specifically, exclusive terminal devices 200(1) and 200(2) provided to the movable objects 110(1), 110(2), portable general-use terminal devices 300.

The terminal devices 200(1) to (n) include at least one terminal device that could serve as a distribution source for other terminal devices. The terminal devices 200(1) to (n) may include a terminal device that does not substantially serve as a distribution source for the other terminal devices.

It should be noted that the above expression reading "terminal device that does not substantially serve as a distribution source for the other terminal devices" means that the terminal device is capable of serving as a distribution source, provided that the distribution destination is a movable object of the same model; however is not able to serve as a distribution source if the distribution destination is of a different model; i.e., a terminal device that does not have pieces of model information MI except for its own (except the destination model(s)) and does not have updating software packages WFW associated with the pieces of model information MI of the other models.

In the following descriptions, terminal devices 200(1) and 200(2) (distribution sources) are each a terminal device that could serve as a distribution source for the other terminal devices, whereas terminal devices 200(3) to 200(n) (non-distribution sources) are each a terminal device that does not substantially serve as a distribution source for the other terminal devices.

The terminal device 200(1) (distribution source) is capable of serving as a destination of updating software packages WFW distributed from the server 130, for updating the software package FW of the control device [113(1) to 113(m)], and as a distribution source for other terminal devices 200(2) to 200(n). Similarly, the terminal device 200(2) (distribution source) is capable of serving as a destination of updating software packages WFW distributed from the server 130 and as a distribution source for other terminal devices 200(1) and 200(3) to 200(n).

More Specifically, the terminal devices 200(1) and 200(2) (distribution sources) are each configured to receive, via a wide area network WN and the wide area communication unit 220, updating software packages WFW in the updating software database DB of the server 130.

The terminal device 200(1) (distribution source) stores in the storage unit 230 thereof updating software packages WFW received from the server 130, and transmits an updating software package WFW stored in the storage unit 230, via its short-range wireless communication unit 240 and a short-range wireless communication network LN, to another terminal device, out of the other terminal devices 200(2) to 200(n), which can be communicated within a range of a short-range wireless communication.

Similarly, the terminal device 200(2) (distribution source) stores in the storage unit 230 thereof updating software packages WFW received from the server 130, and transmits an updating software package WFW stored in the storage unit 230, via its short-range wireless communication unit 240 and a short-range wireless communication network LN, to another terminal device, out of the other terminal devices 200(1) and 200(3) to 200(n), which can be communicated within a short-range wireless communication range.

Further, more specifically, the terminal device 200(1) (distribution source) randomly establishes communication with other terminal devices, out of the other terminal devices 200(2) to 200(n), which can be communicated via the short-range wireless communication unit 240 and the short-range wireless communication network LN within a short-range wireless communication range. The terminal device 200(1) then authenticates the other terminal devices out of the terminal devices 200(2) to 200(n) having established communication, and transmits an updating software package WFW stored in the storage unit 230 of the terminal device 200(1) to a terminal device 200(i) on the other end (where i is an integer ranging from 1 to n, corresponding to suffix of the terminal device on the other end), out of the terminal devices 200(2) to 200(n), which corresponds to a piece of model information MI stored in the storage unit 230 of the terminal device 200(1) (distribution source).

Similarly, the terminal device 200(2) (distribution source) randomly establishes communication with other terminal devices, out of the other terminal devices 200(1) and 200(3) to 200(n), which can be communicated via the short-range wireless communication unit 240 and the short-range wireless communication network LN within a short-range wireless communication range. The terminal device 200(2) then transmits an updating software package WFW stored in the storage unit 230 of the terminal device 200(2) (distribution source) to a terminal device 200(i) on the other end, out of the terminal devices 200(1) and 200(3) to 200(n), which corresponds to a piece of model information MI stored in the storage unit 230 of the terminal device 200(2) (distribution source).

As shown in FIG. 1 to FIG. 3, the server 130 (see FIG. 1) in this example is arranged in a remote monitoring center 120 (see FIG. 1) in a position far apart from the movable objects 110(1) to 110(n) in this example, and is configured to store information related to software packages FW of the control devices 113(1) to 113(m) mounted on the movable objects 110(1) to 110(n).

More specifically, the terminal devices 200(1) to 200(n) and the server 130 have wide area communication units 220 and 132 (specifically, wide area communication interfaces), and are connected with one another by their respective wide area communication units 220 and 132 via a wide area network WN (see FIG. 1), thereby enabling transmission/reception of information amongst the terminal devices 200(1) to 200(n) and the server 130. This way, the server 130 allows the users to remotely monitor the movable objects 110(1) to 110(n) through the remote monitoring center 120. The terminal devices 200(1) to 200(n) in this example are each a remote monitoring terminal device. It should be noted that, depending on the situation, the wide area communication unit 220 does not have to be provided in the terminal devices 200(3) to 200(n).

Further, the server 130 can transmit, to the terminal device [200(1), 200(2)] (distribution source) of the movable object [110(1), 110(2)], information regarding the software packages FW of the control devices 113(1) to 113(m) in the movable objects 110(1) to 110(n). On the other hand, the terminal device [200(1), 200(2)] (distribution source) in the movable object [110(1), 110(2)] can receive, from the server 130, information regarding the software packages FW of the control devices 113(1) to 113(m) in the movable objects 110(1) to 110(n).

It should be noted that the wide area network WN may be a wired communication network, a wireless communication network (wireless communication network in compliance with a so-called mobile communication standard), or a combination of a wired communication network and a wireless communication network. Typically, the wide area network WN is a public line network provided by a telecommunications carrier; e.g., a public line network that allows terminals such as landline telephones and mobile phones to communicate with one another.

The movable objects 110(1) to 110(n) each includes one or a plurality of work units (a plurality of work units in this example) [111(1) to 111(m)] to [111(1) to 111(m)] (see FIG. 1 to FIG. 3); and terminal devices 200(1) to 200(n). For example, where the agricultural work machine is a combine harvester, examples of the work units 111(1) to 111(m) are a traveling work unit, a reaping work unit, a threshing work unit, and the like.

The work units 111(1) to 111(m) are provided with the control devices 113(1) to 113(m), respectively. Each of the control devices 113(1) to 113(m) instructs various actuators (not shown) to suitably control the operational states of the corresponding work unit [111(1) to 111(m)]. The control devices 113(1) to 113(m) are each configured to transfer data to one another based on a communication standard such as a CAN (Controller Area Network) standard or the like.

More specifically, the control devices 113(1) to 113(m) control the operational states of the work units 111(1) to 111(m), based on information (signal) of detection values from various sensors of the work units 111(1) to 111(m) and ON/OFF information of various switches. Further, the control devices 113(1) to 113(m) each determines as needed whether or not an abnormality such as breaking down of the movable object 110 is taking place, and if an abnormality is taking place, generates error information (specifically, an error code) corresponding to that abnormality.

A work unit 111, out of the work units 111(1) to 111(m), which operates an engine (not shown) includes: an engine; a control device 113 configured to monitor the rotational speed and the load condition of the engine and control the entire engine by instructing a suitable injection pressure and an injection timing to the combustion system; an electric power generator (not shown); and a start switch SW, and a battery BT is mounted thereto. Further, the control device 113 configured to control the entire engine controls operation start/stop, and operational states of driving by the engine, in addition to control of the work unit 111 that operates the engine.

It should be noted that, during an operating state of the engine by the work unit 111 operating the engine, the battery BT is suitably charged by electric power supplied from the electric power generator.

The start switch SW is a switch for selectively switching a power-on state and a power-off state. It should be noted that the power-on state is a state in which electric power is supplied from the battery BT to a control unit 210 and the control device [113(1) to 113(m)]. The power-off state is a state in which supply of electric power from the battery BT to a control unit 210 and the control device [113(1) to 113(m)] is shut-off.

More specifically, the battery BT is connected, via the start switch SW, to both a power source connection line L1 connected to the control unit 210 and a power source connection line L2 connected to the control device [113(1) to 113(m)].

In this example, the start switch is a switch so called key switch, and an on-terminal thereof is a connection terminal of the power source connection lines L1 and L2. An off-terminal is a terminal while the start switch SW is in the off state.

It should be noted that the battery BT and a power control unit 260 are connected via a power source connection line L3, irrespective of the ON/OFF state of the start switch SW.

Here, a turn-off operation for switching the start switch SW to an OFF-state includes a turn-off operation for powering off the control device [113(1) to 113(m)]. The power source control unit 260 does not turn off the power source of the control unit 210 and maintains it in an ON-state of the control unit 210, even if the turn-off operation of the start switch SW is conducted. The power source of the control unit 210 is turned off in response to an instruction signal from the control unit 210.

### [Server]

As shown in FIG. 1, the server 130 includes a control unit 131, a wide area communication unit 132, and the storage unit 133.

### (Control Unit)

The control unit 131 includes: a processing unit 131a constituted by a so-called computer such as a CPU (Central Processing Unit); and a memory unit 131b including a volatile memory such as a ROM (Random Only Memory), a RAM (Random Access Memory).

The control unit 131 is configured to perform operation control of various structuring elements by having the processing unit 131a load a control program stored in advance in the ROM of the memory unit 131b into the RAM of the memory unit 131b, and running the program.

In the present embodiment, the control unit 131 controls transmission/reception of data during communications, various inputs and outputs, and arithmetic processing.

### (Wide Area Communication Unit)

The wide area communication unit 132 is electrically connected to a data line of the control unit 131. With instructions from the control unit 131, the wide area communication unit 132 is able to perform communication using the same communication protocol as the wide area communication units 220 (see FIG. 1 to FIG. 3) of the terminal devices 200(1) to 200(n) of the movable objects 110(1) to 110(n). Data transmitted/received during communication is converted by the wide area communication unit 132 so as to comply with the communication protocol. The wide area communication unit 132 transmits information in the storage unit 133, which is related to the software packages FW of the control devices 113(1) to 113(m) in the movable objects 110(1) to 110(n), to the terminal devices 200(1) to 200(n) [terminal devices 200(1) and 200(2) in this example] in the movable objects 110(1) to 110(n) [movable objects 110(1) and 110(2) in this example].

### (Storage Unit)

The storage unit 133 is electrically connected to a data line of the control unit 131. With instructions from the control unit 131, the storage unit 133 controls writing and reading of information. The storage unit 133, in this example, is a large-capacity storage unit such as a flush memory, or a hard disk device.

In the storage unit 133, the updating software database DB is stored.

When the type of the movable objects 110(i) on the other end (e.g., movable work machines, ships) are different, it goes without saying that the software packages FW of the control devices 113(1) to 113(m) mounted on the movable objects 110(i) on the other end may be different. Even if the movable objects 110(i) on the other end are the same type, the software packages FW of the control devices 113(1) to 113(m) mounted to the movable objects 110(i) of different models may be different. If the updating software packages WFW stored in the storage unit 230 are not for the software packages FW of the control devices 113(1) to 113(m) mounted to the movable objects 110(i) on the other end, the software packages FW of the control devices 113(1) to 113(m) of the movable objects 110(i) on the other end cannot be rewritten.

In view of the above, the updating software database DB stores updating software packages WFW in association with pieces of model information MI of the movable objects 110(1) to 110(n). Further, the updating software database DB stores pieces of update information RI of the updating software packages WFW.

In the present embodiment, the updating software database DB includes: the model information management database DB1; the updating software management database DB2; and the updating software storing database DB3. The updating software storing database DB3 stores updating software packages WFW.

When a new model is developed, an updating software package WFW is registered at any time in the updating software storing database DB3. When a new version of the software package FW is developed, the updating software package WFW is updated at any time in the updating software storing database DB3.

Further, in the storage units 230 of the terminal devices 200(1) to 200(n) in the movable objects 110(1) to 110(n), pieces of model information MI and pieces of update information RI such as the versions VR, the date and time of update, and the like of the software packages FW of the control devices 113(1) to 113(m) are registered.

### [Dedicated Terminal Device (Distribution Source)]

Next, a system configuration of the dedicated terminal device [200(1), 200(2)] (distribution source) is described with reference to FIG. 1 to FIG. 3.

### - Hardware Configuration of Dedicated Terminal Device (Distribution Source) -

As shown in FIG. 1 to FIG. 3, the terminal devices 200(1) and 200(2) (distribution sources) each includes a control unit 210 (an example of computer), a wide area communication unit 220, a storage unit 230, a short-range wireless communication unit 240, a signal communication unit 250, and a power source control unit 260.

### (Control Unit)

The control unit 210 includes: a processing unit 210a constituted by a so-called computer such as a CPU (Central Processing Unit); and a memory unit 210b including a volatile memory such as a ROM (Random Only Memory), a RAM (Random Access Memory).

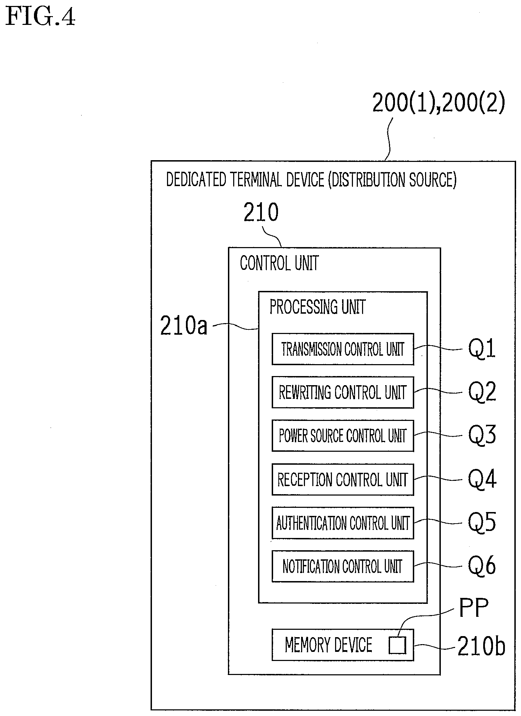

The control unit 210 is configured to achieve various functions necessary for the control unit 210, by running programs such as software rewriting program PP (see FIG. 4 described later) which is stored (installed) in advance in the storage unit 230. Specifically, the control unit 210 is configured to perform various processes by having a processing unit 210a thereof load a program such as the software rewriting program PP stored in advance in the storage unit 230 into the RAM of the memory device 210b, and running that program. The RAM of the memory device 210b provides a working area to the control unit 210.

In the present embodiment, the control unit 210 controls transmission/reception of data during communications, various inputs and outputs, and arithmetic processing.

### (Wide Area Communication Unit)

The wide area communication unit 220 is electrically connected to a data line of the control unit 210. With instructions from the control unit 210, the wide area communication unit 220 is able to perform communication using the same communication protocol as the wide area communication unit 132 (see FIG. 1) of the server 130. Data transmitted/received during communication is converted by the wide area communication unit 220 so as to comply with the communication protocol. Further, the wide area communication unit 220 receives, from the server 130, information regarding software packages FW of the control devices 113(1) to 113(m) in the movable objects 110(1) to 110(n), which information is stored in the storage unit 133 of the server 130.

### (Storage Unit)

The storage unit 230 is electrically connected to a data line of the control unit 210. With instructions from the control unit 210, the storage unit 230 controls writing and reading of information. The storage unit 230, in this example, is a large-capacity storage unit such as a flush memory.

The storage unit 230 stores therein a model information management database DB1, an updating software management database DB2, and an updating software storing database DB3.

### (Short-Range Wireless Communication Unit)

The short-range wireless communication unit 240 in the terminal device 200(1) (distribution source) performs short-range wireless communication with the short-range wireless communication units 240 of the terminal device 200(2) (distribution source) and the terminal devices 200(3) to 200(n) (non-distribution sources). Further, the short-range wireless communication unit 240 in the terminal device 200(2) (distribution source) performs short-range wireless communication with the short-range wireless communication units 240 of the terminal device 200(1) (distribution source) and the terminal devices 200(3) to 200(n) (non-distribution sources).

Examples of the short-range wireless communication includes wireless communication of several meters to approximately 100 meters, such as wireless LAN (Local Area Network) communication which allows communication at a short distance of several tens of meters to approximately 100 meters, and wireless PAN (Personal Area Network) communication which allows communication at a short distance of several meters to several tens of meters.

An example of the wireless LAN communication is wireless LAN communication based on IEEE802.11 standard, typically WiFi (Registered Trademark) standard. An example of the wireless PAN communication is wireless PAN communication based on IEEE802.15 standard, typically Bluetooth (Registered Trademark) standard. In this example, the short-range wireless communication units 240 is configured to perform wireless LAN communication according to the IEEE 802.11 standard.

### (Signal Communication Unit)

The signal communication unit 250 exchanges information with the control devices 113(1) to 113(m) of the work units 111(1) to 111(m), by communication according to a communication standard such as the CAN standard.

### (Power Source Control Unit)

The power source control unit 260 supplies electric power to the control unit 210. In the present embodiment, the power source control unit 260 is connected to the battery BT irrespective of the ON/OFF state of the start switch SW. Specifically, an input end power source line (not shown) of the power source control unit 260 and the battery BT are connected via the power source connection line L3. This way, the electric power from the battery BT is always supplied to the power source control unit 260.

Further, to the control unit 210, the electric power from the battery BT is supplied via the power source control unit 260.

### - Software Configuration of Dedicated Terminal Device (Distribution Source) -

FIG. 4 is a block diagram showing an exemplary software configuration of the dedicated terminal device 200(1), 200(2) (distribution source) shown in FIG. 1 to FIG. 3.

As shown in FIG. 4, the control unit 210 includes: a transmission control unit Q1, a rewriting control unit Q2, a power source control unit Q3, a reception control unit Q4, an authentication control unit Q5, and a notification control unit Q6. In other words, the software rewriting program PP causes the control unit 210 to execute steps including: a transmission control step corresponding to the transmission control unit Q1, a rewriting control step corresponding to the rewriting control unit Q2, a power source control step corresponding to the power source control unit Q3, a reception control step corresponding to the reception control unit Q4, an authentication control step corresponding to the authentication control unit Q5, and a notification control step corresponding to the notification control unit Q6.

### (Transmission Control Step)

In the transmission control step, the control unit 210 transmits an updating software package WFW for updating the software package FW of the control device [113(1) to 113(m)] to the control device [113(1) to 113(m)], when a turn-off operation for powering off the control device [113(1) to 113(m)] is conducted.

In the transmission control step of the present embodiment, when a turn-off operation for powering off the control device [113(1) to 113(m)] is conducted, the control unit 210 transmits the updating software package WFW stored in the storage units 230 for updating the software package FW to the control device [113(1) to 113(m)] of the own movable object [110(1), 110(2)] and/or to the at least one other movable object 110(i) via the short-range wireless communication unit 240 and the short-range wireless communication network LN.

The control unit 210 recognizes the turn-off operation of powering off the control device [113(1) to 113(m)], when supply of electric power from the battery BT via the power source connection line L1 is shut-off.

Specifically, the control unit 210 specifies, from the pieces of model information stored in its storage unit 230, a piece of model information of a movable object 110(i) on the other end, and transmits an updating software package WFW corresponding to the piece of model information of the movable object 110(i) on the other end, out of the updating software packages WFW stored in the storage unit 230, to the movable object 110(i) on the other end via the short-range wireless communication unit 240 and the short-range wireless communication network LN.

Prior to transmission of the updating software package WFW to the movable objects 110(i) on the other end, the control unit 210 may transmit a piece of update information of the updating software package WFW stored in the storage unit 230 to the movable object 110(i) on the other end, via the short-range wireless communication units 240 and the short-range wireless communication network LN.

This way, in movable object 110(i) on the other end, the piece of update information RI such as the version VR and the like of the software package FW of the control device [113(1) to 113(m)] before rewriting can be compared with the piece of update information such as the version and the like of the updating software package WFW. Then, whether or not the software package FW of the control device [113(1) to 113(m)] before rewriting is the latest package may be determined. If the package is determined as not to be the latest one, the updating software package WFW for the latest package may be requested to the terminal device 200(1) (distribution source) or the terminal device 200(2) (distribution source), whereas if the package is determined as to be the latest one, the updating software package WFW for the latest package is not requested to the terminal device 200(1) (distribution source) or the terminal device 200(2) (distribution source). Thus, whether or not the software package FW for the control device [113(1) to 113(m)] is the latest package can be recognized in the movable object 110(i) on the other end, before transmission of the updating software package WFW to the movable object 110(i) on the other end. Hence, unnecessary transmission operation of updating software packages WFW to a movable object 110(i) on the other end can be omitted.

Further, prior to transmission of the updating software package WFW to the movable object 110(i) on the other end, the control unit 210 may receive, from the movable object 110(i) on the other end, the piece of update information RI of the software package FW for the control device [113(1) to 113(m)] in the movable object 110(i) on the other end before rewriting. Then, the control unit 210 can compare the received piece of update information RI such as the version VR and the like of the software package FW with the piece of update information RI such as the version VR and the like of the updating software package WFW stored in the storage unit 230, and determine whether or not the software package FW of the control device [113(1) to 113(m)] before rewriting is the latest package. If the package is determined as not to be the latest one, the latest updating software package WFW may be transmitted to the movable object 110(i) on the other end, whereas if the package is determined as to be the latest, the latest updating software package WFW may not be transmitted to the movable object 110(i) on the other end.

Thus, whether or not the software package FW for the control device [113(1) to 113(m)] is the latest package can be recognized in the terminal device 200(1) (distribution source) or the terminal device 200(2) (distribution source), before transmission of the updating software package WFW to the movable object 110(i) on the other end. Hence, unnecessary transmission operation of updating software packages WFW to movable objects 110(i) on the other end can be omitted.

### (Rewriting Control Step)

The terminal devices 200(1) and 200(2) (distribution sources) are provided to the movable objects 110(1) and 110(2), respectively.

In the rewriting control step, the control unit 210 rewrites the software package FW of the control device [113(1) to 113(m)] with the updating software package WFW transmitted to the control device [113(1) to 113(m)].

Specifically, in the rewriting control step, the control unit 210 specifies an updating software package WFW corresponding to a piece of model information of a movable object 110(i) on the other end, out of the updating software packages WFW stored in the storage units 230. In the above-described transmission control step, the control unit 210 transmits the latest software package FW specified to the control device [113(1) to 113(m)] mounted in the movable object 110(i) on the other end. Then, the terminal device (i) or the control device [113(1) to 113(m)] in the movable object 110(i) on the other end rewrites the software package FW to the latest one.

Further, in the rewriting control step, the control unit 210 specifies an updating software package WFW corresponding to a piece of model information of the own movable object 110(1), 110(2), out of the updating software packages WFW stored in the storage units 230. In the above-described transmission control step, the control unit 210 transmits the latest software package FW specified to the control device [113(1) to 113(m)] mounted in the own movable object [110(1), 110(2)]. Then, the terminal device (i) or the control device [113(1) to 113(m)] rewrites the software package FW to the latest one in the own movable object [110(1), 110(2)].

### (Power Source Control Step)

If the power source of the control device [113(1) to 113(m)] is turned off immediately after the turn-off operation for turning off the power source of the control device [113(1) to 113(m)], there may not be sufficient time for transmitting the updating software package WFW to the control device [113(1) to 113(m)], and the updating software package WFW may not be reliably transmitted to the control device [113(1) to 113(m)].

In view of this, in the power source control step, the control unit 210 maintains the power source of the control device [113(1) to 113(m)] in the ON-state, even if the turn-off operation for turning off the power source of the control device [113(1) to 113(m)] is conducted (specifically, even if the turn-off operation of the start switch SW is received), until the updating software package WFW is transmitted to the control device [113(1) to 113(m)]. When the transmission of the updating software package WFW to the control device [113(1) to 113(m)] is completed, the power source of the control device [113(1) to 113(m)] is turned off.

Specifically, in the power source control step, the power source is maintained in the ON-state by the power source control unit 260 even if the turn-off operation of the start switch SW is conducted, and the control unit 210 transmits the updating software package WFW to the control device [113(1) to 113(m)]. Then, the control unit 210 turns off the power source of the control device [113(1) to 113(m)], and further instructs the power source control unit 260 to turn off itself. Then, the power source of the control unit 210 is turned off by the power source control unit 260.

### (Reception Control Step)

The terminal device [200(1), 200(2)] includes a wide area communication unit 220 (an exemplary communication unit) configured to perform communication with the server 130 which manages the software packages FW of the control device [113(1) to 113(m)]. In the reception control step, the control unit 210 receives the updating software package WFW from the server 130 via the wide area network WN and the wide area communication unit 220.

In the reception control step of this example, the control unit 210 receives, via the wide area network WN and the wide area communication unit 220, updating software packages WFW in the updating software storing database DB3 from the server 130 having the updating software storing database DB3 storing the updating software packages WFW.

Specifically, the control unit 210 receives, via the wide area network WN and the wide area communication unit 220, pieces of model information and the updating software packages WFW associated with pieces of model information in the updating software database DB from the server 130.

More specifically, the control unit 210 receives, via the wide area network WN and the wide area communication unit 220, updating software packages WFW and pieces of update information of the updating software packages WFW from the updating software database DB of the server 130.

### (Authentication Control Step)

The control device [113(1) to 113(m)] typically needs to be operated by an updating software package WFW authorized by a manufacturer which develops the software package FW. If the updating software package WFW for rewriting the software package FW of the control device [113(1) to 113(m)] is, for example, "falsified" or "impersonated" and therefore is not an authorized package, it is highly preferable to have the server 130 managing the software packages FW of the control devices 113(1) to 113(m) recognize that rewriting of the software package FW of the control device [113(1) to 113(m)] has failed (specifically, that the updating software packages WFW is not authentic).

To this end, in the reception control step, the control unit 210 receives a digital certificate of the updating software package WFW from the server 130 via the wide area network WN and the wide area communication unit 220.

Then, in the authentication control step, the control unit 210 checks whether or not the updating software packages WFW is an authentic package based on the digital certificate received in the reception control step.

### (Notification Control Step)

If the updating software package WFW is determined as not to be authentic based on the digital certificate in the authentication control step, the control unit 210, in the notification control step, transmits notification informing a failure in rewriting the software package FW of the control device [113(1) to 113(m)] to the server 130 via the wide area communication unit 220.

An example of the digital certificate can be a certificate issued by a certification authority of the manufacturer developed the software package FW. Traditionally known techniques can be adopted for checking whether or not the updating software package WFW is authentic based on the digital certificate. Therefore, the description thereof is omitted here. The authentication may be performed on the side of the terminal device [200(1), 200(2)] or on the side of the control device [113(1) to 113(m)].

### (Reception Control Step)

If the structure of the digital certificate is analyzed, the updating software packages WFW could be vulnerable to modification to non-authentic package by "falsification" or "impersonation" and the like. Therefore, it is desirable to keep the structure of the digital certificate from being analyzed.

To this end, in the reception control step, the control unit 210 receives the digital certificate of the updating software package WFW from the server 130 via the wide area network WN and the wide area communication unit 220 while the power source of the control device [113(1) to 113(m)] is in the ON-state. Then, the terminal device [200(1), 200(2)] deletes the digital certificate when the power source of the control device [113(1) to 113(m)] is turned off. In this case, by storing the digital certificate in a volatile memory, the digital certificate can be deleted by shutting off the power supply to the volatile memory.

### (Notification Control Step)

The updating software package WFW needs to be properly operates in the control device [113(1) to 113(m)]. If the software package FW does not properly operate in the control device [113(1) to 113(m)] due to a bug and the like in the updating software package WFW, it is highly preferable to have the server 130 managing the software packages FW of the control devices 113(1) to 113(m) recognize that rewriting of the software package FW of the control device [113(1) to 113(m)] has failed [specifically, that the software package FW does not properly operate in the control device [113(1) to 113(m)]].

To this end, in the notification control step, the control unit 210 tests whether or not the software package FW updated by the updating software package WFW for the control device [113(1) to 113(m)] properly operates. If the updating software package WFW updated by the updating software package WFW does not properly operate in the control device [113(1) to 113(m)], the control unit 210 transmits notification informing a failure in rewriting the software package FW of the control device [113(1) to 113(m)] to the server 130 via the wide area communication unit 220.

The test for checking whether or not the software package FW updated by the updating software package WFW of the control device [113(1) to 113(m)] may be performed on the side of the terminal device [200(1), 200(2)] or on the side of the control device [113(1) to 113(m)].

### [Dedicated Terminal Device (Non-Distribution Source)]

As shown in FIG. 3, the terminal devices 200(3) to 200(n) (non-distribution sources) each has updating software packages WFW which do not have pieces of model information MI of other movable objects 110(i) in the terminal devices 200(1) and 200(2) (distribution source).

### [Second Embodiment]

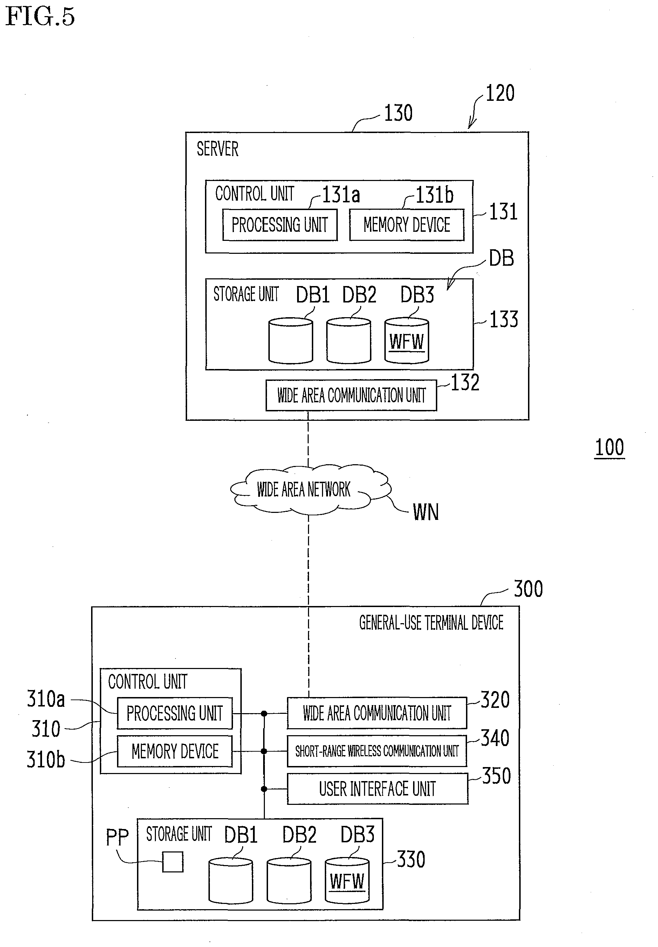

FIG. 5 to FIG. 7 are structural view schematically showing an exemplary software rewriting system 100 related to a second embodiment.

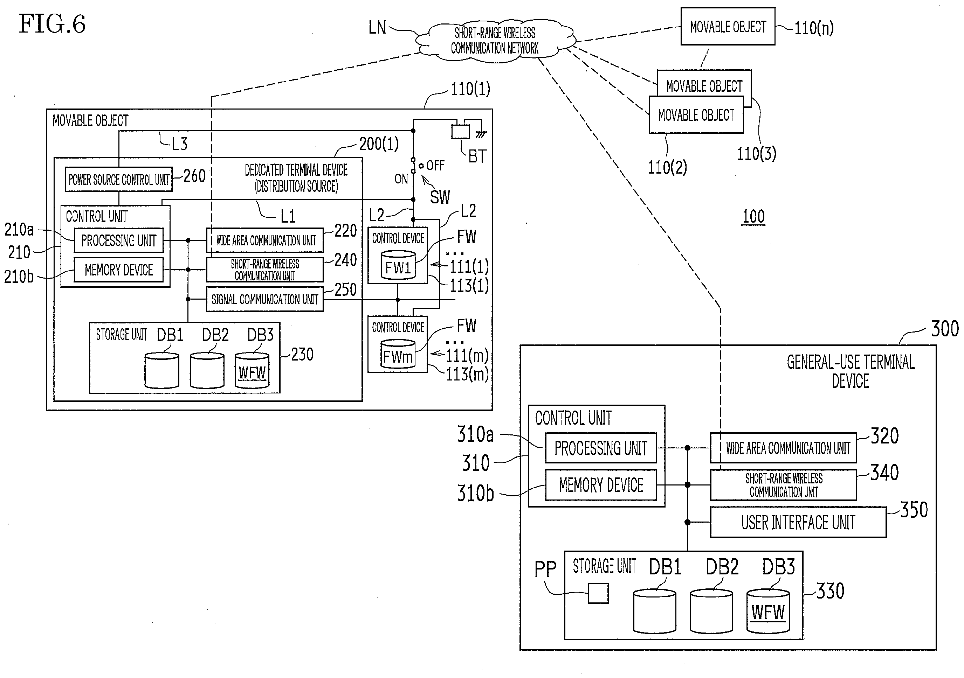

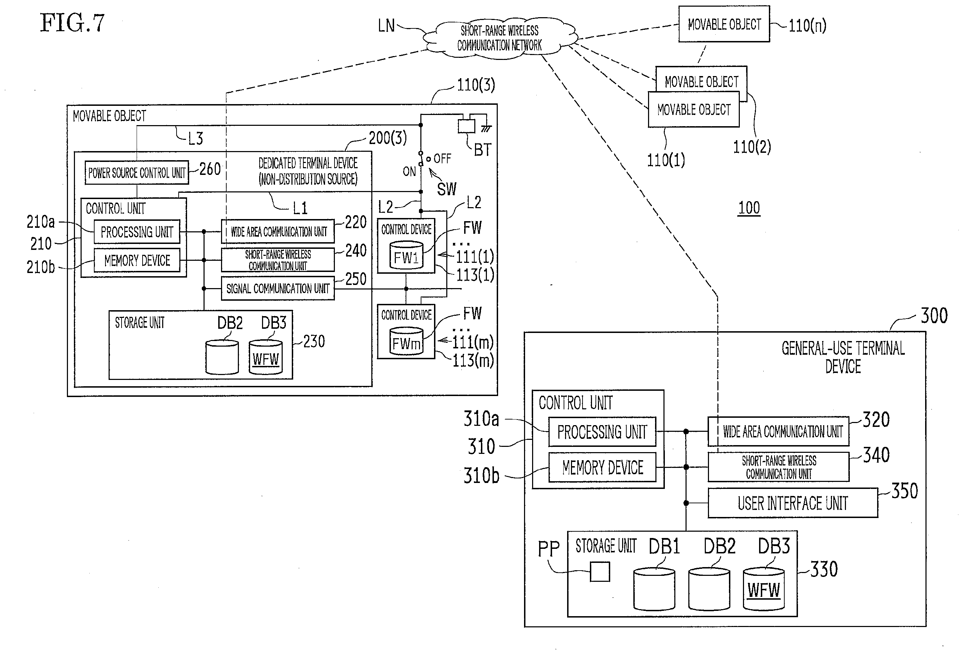

FIG. 5 is a schematic view of a state where a general-use terminal device 300 is communicating with the server 130 via a wide area network WN. FIG. 6 is a schematic view showing a state where the general-use terminal device 300 having communicated with the server 130 is communicating, via a short-range wireless communication network LN, with a dedicated terminal device 200(1) that could serve as a distribution source, in the software rewriting system 100 shown in FIG. 5. FIG. 7 is a schematic view showing a state where the general-use terminal device 300 having communicated with the server 130 is communicating, via a short-range wireless communication network LN, with a dedicated terminal device 200(3) that does not substantially serve as a distribution source, in the software rewriting system 100 shown in FIG. 5.

The software rewriting system 100 related to the second embodiment includes a general-use terminal device 300 in the software rewriting system 100 related to the first embodiment.

Next, a system configuration of the general-use terminal device (300) is described with reference to FIG. 5 to FIG. 7.

### [General-Use Terminal Device]

### - Hardware Configuration of General-Use Terminal Device -

As shown in FIG. 5 to FIG. 7, the terminal device 300 includes a control unit 310 (an example of computer), a wide area communication unit 320, a storage unit 330, a short-range wireless communication unit 340, and a user interface unit 350. It should be noted that a plurality of terminal devices 300 may be provided.

Here, the general-use terminal device 300 is, for example, a multi-function portable communication terminal device such as a tablet computer, a smartphone, and the like.

### (Control Unit)

The control unit 310 includes: a processing unit 310a constituted by a so-called computer such as a CPU (Central Processing Unit); and a memory unit 310b including a volatile memory such as a ROM (Random Only Memory), a RAM (Random Access Memory).

The control unit 310 is configured to achieve various functions necessary for the control unit 310, by running programs such as software rewriting program PP which is stored (installed) in advance in the storage unit 330. Specifically, the control unit 310 is configured to perform various processes by having a processing unit 310a thereof load a program such as the software rewriting program PP stored in advance in the storage unit 330 into the RAM of the memory device 310b, and running that program. The RAM of the memory device 310b provides a working area to the control unit 310.

In the present embodiment, the control unit 310 controls transmission/reception of data during communications, various inputs and outputs, and arithmetic processing.

### (Wide Area Communication Unit)

The wide area communication unit 320 is electrically connected to a data line of the control unit 310. With instructions from the control unit 310, the wide area communication unit 320 is able to perform communication using the same communication protocol as the wide area communication unit 132 (see FIG. 5) of the server 130. Data transmitted/received during communication is converted by the wide area communication unit 320 so as to comply with the communication protocol. Further, the wide area communication unit 320 receives, from the server 130, information regarding software packages FW of the control devices 113(1) to 113(m) in the movable objects 110(1) to 110(n), which information is stored in the storage unit 133 of the server 130.

### (Storage Unit)

The storage unit 330 is electrically connected to a data line of the control unit 310. With instructions from the control unit 310, the storage unit 330 controls writing and reading of information. The storage unit 330, in this example, is a large-capacity storage unit such as a flush memory. It should be noted that, the software rewriting program PP is stored (installed) in advance in the storage unit 330.

It should be noted that, the software rewriting program PP, in this example, is a program so-called an app used in a multi-function portable communication terminal device such as a tablet computer and a smartphone, and is downloaded from a not-shown program server via communication means such as the internet.

The storage unit 330 stores therein a model information management database DB1, an updating software management database DB2, and an updating software storing database DB3.

### (Short-Range Wireless Communication Unit)

The short-range wireless communication unit 340 in the terminal device 300 performs short-range wireless communication with short-range wireless communication units 240 of the terminal devices 200(1) to 200(n).

### (User Interface Unit)

The user interface unit 350 includes an output device such as a display device and an input device such as touch panel. Typically, the user interface unit 350 is capable of activating and controlling the software rewriting program PP, and displaying progress information and the like.

### - Software Configuration of General-Use Terminal Device -

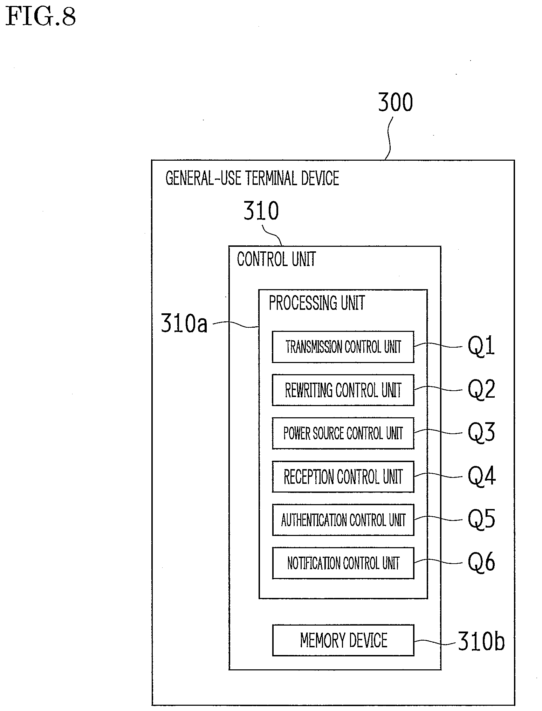

FIG. 8 is a block diagram showing an exemplary software configuration of the general-use terminal device 300 shown in FIG. 5 to FIG. 7.

As shown in FIG. 8, the control unit 310 includes: a transmission control unit Q1, a rewriting control unit Q2, a power source control unit Q3, a reception control unit Q4, an authentication control unit Q5, and a notification control unit Q6. In other words, the software rewriting program PP causes the control unit 310 to execute steps including: a transmission control step corresponding to the transmission control unit Q1, a rewriting control step corresponding to the rewriting control unit Q2, a power source control step corresponding to the power source control unit Q3, a reception control step corresponding to the reception control unit Q4, an authentication control step corresponding to the authentication control unit Q5, and a notification control step corresponding to the notification control unit Q6.

It should be noted that the following description of the transmission control step, the rewriting control step, the power source control step, the reception control step, the authentication control step, and the notification control step performed by the control unit 310 focuses on the differences from the transmission control step, the reception control step, the power source control step, the reception control step, the authentication control step, and the notification control step performed by the control unit 210 of the dedicated terminal device 200(1), 200(2).

The general-use terminal device 300 further performs the following operation in the reception control step, the transmission control step, and the power source control step.

Namely, the movable objects 110(1) to 110(n) are each configured to transmit to the terminal device 300 turn-off information indicating that a turn-off operation for turning off the control device [113(1) to 113(m)] is conducted.

The turn-off information is regarded as shut-off information of power supply from the battery BT via the power source connection line L1.

### (Reception Control Step)

In the reception control step, the control unit 310 receives turn-off information from any of the movable objects 110(1) to 110(n) via the short-range wireless communication network LN and the short-range wireless communication unit 340.

Specifically, the control unit 310 receives, as the turn-off information, the shut-off information of power supply from the battery BT via the power source connection line L1.

### (Transmission Control Step)

When the turn-off information is received in the reception control step, the control unit 310 in the transmission control step transmits the updating software package WFW to the electric device [the movable objects 110(1) to 110(n) in this example] via the short-range wireless communication unit 340 and the short-range wireless communication network LN.

### (Power Source Control Step)

In the power source control step, the control unit 310 maintains the power source of the control device [113(1) to 113(m)] in the ON-state [Specifically, provides the control unit 210 of the movable object [110(1) to 110(n)] with an instruction to maintain the ON-state of the power source of the control device [113(1) to 113(m)]], even if the turn-off operation for turning off the power source of the control device [113(1) to 113(m)] is conducted in the movable object [110(1) to 110(n)] (specifically, even if the turn-off information is received), until the updating software package WFW is transmitted to the control device [113(1) to 113(m)]. When the transmission of the updating software package WFW to the control device [113(1) to 113(m)] is completed, the power source of the control device [113(1) to 113(m)] is turned off [specifically, provides the control unit 210 of the movable object [110(1) to 110(n)] to turn off the power source of the control device [113(1) to 113(m)]].

Specifically, in the power source control step, the control unit 210 in the movable object [110(1) to 110(n)] maintains the power source in the ON-state by the power source control unit 260 even if the turn-off operation of the start switch SW is conducted, and the control unit 310 transmits the updating software package WFW to the control device [113(1) to 113(m)]. The control unit 310 then instructs the control unit 210 in the movable object [110(1) to 110(n)] to turn off the power source of the control device [113(1) to 113(m)]. The control unit 210 turns off the power source of the control device [113(1) to 113(m)], and further instructs the power source control unit 260 to turn off itself. Then, the power source of the control unit 210 is turned off by the power source control unit 260.

It should be noted that the configuration of the software rewriting system 100 related to the first embodiment may be combined with the configuration of the software rewriting system 100 related to the second embodiment.

### [Software Rewriting Process in The Software Rewriting System]

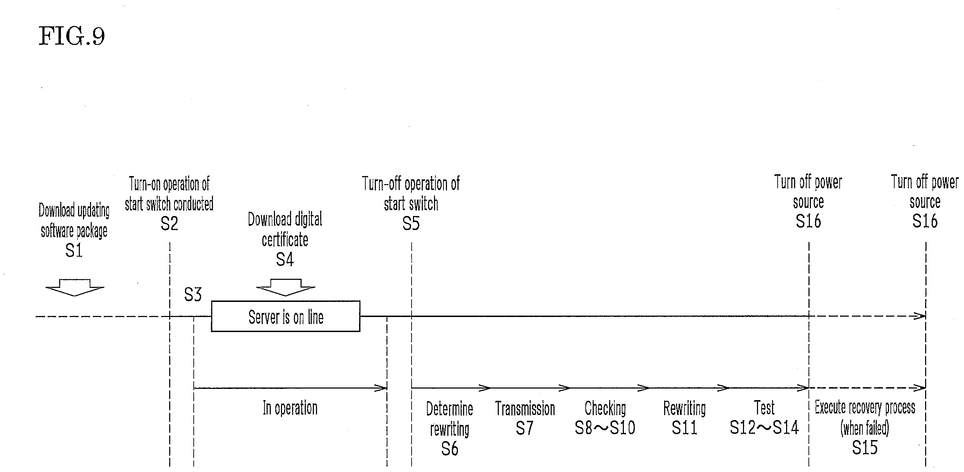

Next, the following describes, with reference to FIG. 9 to FIG. 10, an exemplary software rewriting process in the software rewriting system 100.

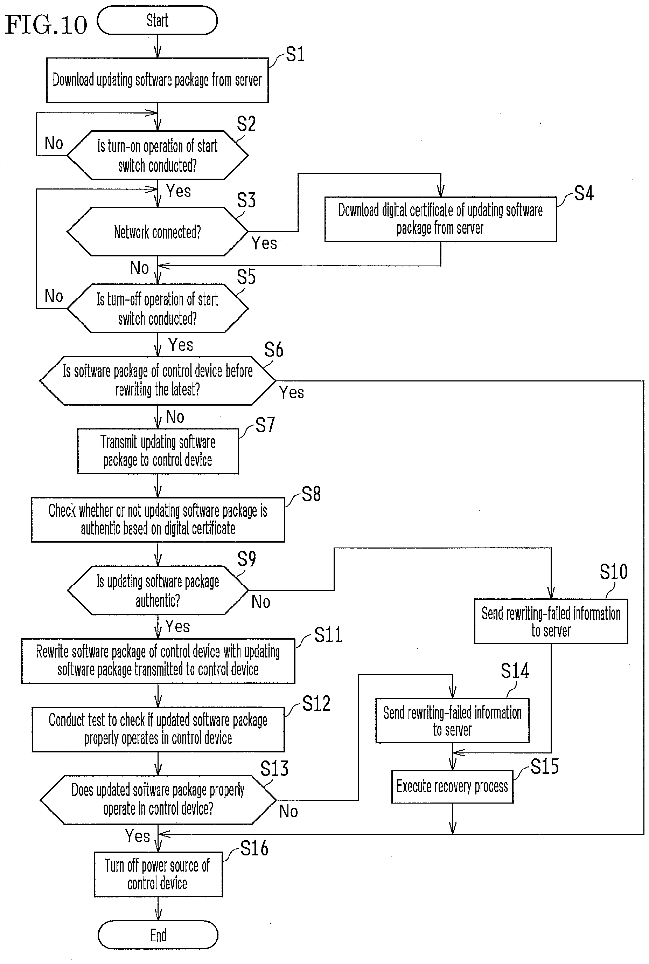

FIG. 9 is an operation chart showing an exemplary software rewriting operation of the software rewriting system 100 shown in FIG. 1 to FIG. 4. FIG. 10 is a flowchart showing an exemplary software rewriting process of the software rewriting system 100 shown in FIG. 9.

The following description of an exemplary process shown in FIG. 9 and FIG. 10 deals with a case where the control unit 210 of the dedicated terminal device 200(1), 200(2) rewrites the software package FW of the control device 113 with the updating software package WFW.

To rewrite the software package FW of the control device [113(1) to 113(m)] of the terminal device [200(1) to 200(n)], in the flowchart of the software rewriting process shown in FIG. 10, the control unit 210 of the terminal device [200(1), 200(2)] first downloads (receives) an updating software package WFW from the server 130 via, for example, a typical home network (wide area network WN in this example) and its communication unit (wide area communication unit 220 in this example) irrespective of the ON/OFF state of the start switch SW (during the OFF-state in this example) (Step S1). Then, the control unit 210 stores the updating software package WFW in the storage units 230 in advance.

Next, the control unit 210 determines whether or not a turn-on operation of the start switch SW is conducted (Step S2). If the turn-on operation of the start switch SW is conducted (Step S2: Yes), whether or the network is connected is determined (Step S3).

Next, if the network is connected (on-line state) (Step S3: Yes), the control unit 210 downloads (receives) the digital certificate of the updating software package WFW from the server 130 via the network (wide area network WN in this example) and the communication unit (wide area communication unit 220 in this example) (Step S4), and then proceeds to Step S5. On the other hand, if the network is not connected (off-line state) (Step S3: No), the control unit 210 proceeds to Step S5 as it is.

Next, the control unit 210 determines whether a turn-off operation of the start switch SW is conducted (Step S5). If the turn-off operation of the start switch SW is conducted (Step S5: Yes), the control unit 210 determines whether the software package FW of the control device [113(1) to 113(m)] before rewriting is the latest one (Step S6). If the software package FW before rewriting is determined as to be the latest one (Step S6: Yes), the control unit 210 proceeds to Step S16. On the other hand, if the software package FW before rewriting is determined as not to be the latest one (Step S6: No), the control unit 210 proceeds to Step S7. This determination may be performed on the side of the control device [113(1) to 113(m)]. At this time, even though the control device [113(1) to 113(m)] is in a non-operating status and is not operated by the software package FW, the power source control unit 260 does not turn off the power source of the control unit 210 despite the turn-off operation of the start switch SW, and maintains the ON-state of the power source of the control unit 210. Even if the turn-off operation for turning off the power source of the control device [113(1) to 113(m)] is conducted, the control unit 210 maintains the ON-state of the power source of the control device [113(1) to 113(m)] at least until the updating software package WFW is transmitted to the control device [113(1) to 113(m)].

Next, the control unit 210 transmits the updating software package WFW stored in the storage units 230 to the control device [113(1) to 113(m)] of the own movable object [110(1), 110(2)] and/or to the control device [113(1) to 113(m)] of at least one other movable object 110(i) via the short-range wireless communication unit 240 and the short-range wireless communication network LN (Step S7).

Next, if the digital certificate is downloaded in the Step S3, S4, the control unit 210 checks if the updating software package WFW is authentic, based on the downloaded digital certificate (Step S8). This checking may be performed on the side of the control device [113(1) to 113(m)].

Next, the control unit 210 checks if the updating software package WFW is authentic (Step S9). This checking may be performed on the side of the control device [113(1) to 113(m)]. If the updating software package WFW is authentic (Step S9: Yes), the control unit 210 proceeds to Step S11. On the other hand, if the updating software package WFW is not authentic (Step S9: No), the control unit 210 transmits rewriting-failed information indicating a failure in rewiring the software package FW of the control device [113(1) to 113(m)] (specifically, indicating that the updating software package WFW is not authentic) to the server 130 via the communication unit (wide area communication unit 220 in this example) and the network (wide area network WN in this example) (Step S10), and then proceeds to Step S15.

Next, the control unit 210 rewrites the software package FW of the control device [113(1) to 113(m)] with the updating software package WFW transmitted to the control device [113(1) to 113(m)] (Step S11). This rewriting may be performed on the side of the control device [113(1) to 113(m)].

Next, the control device [113(1) to 113(m)] conducts a test to check if the software package FW updated by the updating software package WFW properly operates in the control device [113(1) to 113(m)] (Step S12). This test may be performed on the side of the control unit 210.

Next, the control device [113(1) to 113(m)] determine whether the software package FW updated by the updating software package WFW properly operates in the control device [113(1) to 113(m)] based on the result of the test (Step S13). This determination may be performed on the side of the control unit 210.

Next, if the updated software package FW properly operates in the control device [113(1) to 113(m)] (Step S13: Yes), the control unit 210 proceeds to Step S16. On the other hand, if the updated software package FW does not properly operate in the control device [113(1) to 113(m)] (Step S13: No), the control unit 210 transmits rewriting-failed information indicating a failure in rewiring the software package FW of the control device [113(1) to 113(m)] [specifically, indicating that the software package FW does not properly operate in the control device [113(1) to 113(m)]] to the server 130 via the communication unit (wide area communication unit 220 in this example) and the network (wide area network WN in this example) (step S14), and then proceeds to Step S15.

After the process of Step S10 or Step S14, the control device [113(1) to 113(m)] performs a recovery process to operate the previous version of software package FW which has been properly operated, in the control device [113(1) to 113(m)] (Step S15). This recovery process may be instructed on the side of the control unit 210.

The control unit 210 turns off the power source of the control device [113(1) to 113(m)] (Step S16), and further instructs the power source control unit 260 to turn off itself. Then, the power source of the control unit 210 is turned off by the power source control unit 260, and the process is terminated. At this time, the digital certificate is stored in a volatile memory, and is deleted upon shutting off the power supply to the volatile memory.

It should be noted that a general-use terminal device 300 may be adopted instead of or in addition to the dedicated terminal device 200(1), 200(2).

### (Regarding the Present Embodiment)

In the above embodiments [terminal device [200(1), 200(2)] of the first embodiment, and the terminal device 300 of the second embodiment], when a turn-off operation for turning of the power source of the control device [113(1) to 113(m)] is conducted, the updating software package WFW for updating the software package FW of the control device [113(1) to 113(m)] is transmitted to the control device [113(1) to 113(m)]. Therefore, the updating software package WFW can be automatically transmitted to the control device [113(1) to 113(m)] in cooperation with the turn-off operation of turning off the power source of the control device [113(1) to 113(m)]. The above configuration can eliminate the need for having a user intentionally make an operation of rewriting the software package FW every time the software package FW of the control device [113(1) to 113(m)] is to be rewritten. Thus, an improvement in the convenience at a time of rewriting the software package FW of the control device [113(1) to 113(m)] is possible. Further, the software package FW of the control device [113(1) to 113(m)] can be rewritten without disturbing the work of the user.

Further, in the above embodiments, the software package FW of the control device [113(1) to 113(m)] is rewritten with the updating software package WFW transmitted to the control device [113(1) to 113(m)]. This way, an operation of rewriting the software package FW with the control device [113(1) to 113(m)] can be omitted.

Further, in the present embodiment, the power source of the control device [113(1) to 113(m)] maintained in the ON-state, even if the turn-off operation is conducted, until the updating software package WFW is transmitted to the control device [113(1) to 113(m)]. When the transmission of the updating software package WFW to the control device [113(1) to 113(m)] is completed, the power source of the control device [113(1) to 113(m)] is turned off. This way, there will be time for transmitting the updating software package WFW to the control device [113(1) to 113(m)], and the updating software package WFW can be reliably transmitted to the control device [113(1) to 113(m)].

Further, in the above embodiment, the updating software package WFW is received from the server 130 by using the wide area communication unit 220, 320. This way, a server authorized to manage the software package FW (e.g., the server owned by a manufacturer having developed the software package FW and/or an associated corporation) can be used as the server 130, and an authentic updating software package WFW can be reliably obtained.

Further, in the present embodiment, a digital certificate of the updating software package WFW is received from the server 130 via the wide area communication unit 220, 320, and whether or not the updating software package WFW is authentic is determined based on the digital certificate. This way, an authentic updating software package WFW can be operated in the control device [113(1) to 113(m)]. Further, if the updating software package WFW is determined as not to be authentic as a result of checking with the digital certificate, notification informing a failure in rewriting the software package FW of the control device [113(1) to 113(m)] is transmitted to the server 130 via the wide area communication unit 220, 320. This way, the server 130 managing the software packages FW of the control device [113(1) to 113(m)] recognize that rewriting of the software package FW of the control device [113(1) to 113(m)] has failed (specifically, that the updating software packages WFW is not authentic).

Further, in the present embodiment, the digital certificate of the updating software package WFW is received from the server 130 via the wide area communication unit 220, 320 while the power source of the control device [113(1) to 113(m)] is in the ON-state. The digital certificate is deleted upon turning off the power source of the control device [113(1) to 113(m)]. With this, chances for analyzing the structure of the digital certificate can be reduced, and modification of the updating software package WFW to non-authentic package by "falsification" or "impersonation" can be made difficult.

Further, in the present embodiment, the software package FW updated by using the updating software package WFW of the control device [113(1) to 113(m)] is tested to check whether it properly operates. This way, the updating software package WFW can be properly operated in the control device [113(1) to 113(m)]. As a result of the test, if the software package FW updated by the updating software package WFW does not properly operate in the control device [113(1) to 113(m)], notification informing a failure in rewriting the software package FW of the control device [113(1) to 113(m)] is transmitted to the server 130 via the wide area communication unit 220, 320. This way, the server 130 managing the software packages FW of the control devices 113(1) to 113(m) can recognize that rewriting of the software package FW of the control device [113(1) to 113(m)] has failed [specifically, that the software package FW does not properly operate in the control device [113(1) to 113(m)]].

Further, in the present embodiment, the control device [113(1) to 113(m)] are mounted in the movable object [110(1) to 110(n)]. This way, the updating software package WFW can be automatically transmitted to the control device [113(1) to 113(m)], in cooperation of the turn-off operation of turning off the power source of the control device [113(1) to 113(m)] mounted in the movable object [110(1) to 110(n)]. The above configuration can eliminate the need for having a user intentionally make an operation of rewriting the software package FW every time the software package FW of the control device [113(1) to 113(m)] mounted in the movable object [110(1) to 110(n)] is to be rewritten. Thus, convenience at a time of rewriting the software package FW of the control device [113(1) to 113(m)] mounted in the movable object [110(1) to 110(n)] can be improved.

Further, in the present embodiment [in the terminal device 200(1), 200(2) related to the first embodiment], the movable object 110(1), 110(2) includes a short-range wireless communication unit 240 configured to communicate with at least one other movable object 110(i) other than the movable object 110(1), 110(2) via a short-range wireless communication network LN. With this, the software package FW of the control device [113(1) to 113(m)] mounted in the movable object 110(i) can be reliably rewritten with an updating software package WFW within the communication range of the short-range wireless communication network LN. Further, when a turn-off operation for turning off the power source of the control device [113(1) to 113(m)] is conducted, the updating software package WFW is transmitted to the control device [113(1) to 113(m)] in the own movable object [110(1), 110(2)]. With this, the software package FW of the control device [113(1) to 113(m)] mounted in the own movable object [110(1), 110(2)] can be reliably rewritten with the updating software package WFW. Thus, rewriting with the updating software package WFW can be reliably executed in the control device [113(1) to 113(m)] of the own movable object [110(1), 110(2)]. Further, when a turn-off operation for turning off the power source of the control device [113(1) to 113(m)] is conducted, the updating software package WFW is transmitted to the at least one other movable object 110(i) via the short-range wireless communication unit 240 and the short-range wireless communication network LN. With this, the software package FW of the control device [113(1) to 113(m)] mounted in the at least one other movable object 110(i) can be reliably rewritten with the updating software package WFW. Thus, rewriting with the updating software package WFW can be reliably executed in the control device [113(1) to 113(m)] mounted in the at least one other movable object 110(i).

Further, in the present embodiment (in the terminal device 300 related to the second embodiment), the control device [113(1) to 113(m)] is mounted in an electric device [the movable objects 110(1) to 110(n) in this example]. The terminal device 300 functions as a multi-function portable communication terminal device, and includes a short-range wireless communication unit 340 configured to communicate with the electric device via a short-range wireless communication network LN. With this, a multi-function portable communication terminal device such as a tablet computer or a smartphone can be used as the publicly-available general-use terminal device 300, and the workability in rewriting the software package FW of the control device [113(1) to 113(m)] mounted in an electric device can be improved. When turn-off information is received from the electric device [the movable objects 110(1) to 110(n) in this example] via the short-range wireless communication network LN and the short-range wireless communication unit 340, the terminal device 300 transmits an updating software package WFW to the electric device via the short-range wireless communication unit 340 and the short-range wireless communication network LN. With this, the software package FW of the control device [113(1) to 113(m)] mounted in the electric device can be reliably rewritten with the updating software package WFW. Thus, rewriting with the updating software package WFW can be reliably executed in the control device [113(1) to 113(m)] mounted in the electric device [the movable objects 110(1) to 110(n) in this example].

### (Regarding Other Embodiments)

The software rewriting system 100 related to the above embodiment deal with a case of applying the same to agricultural traveling work machines such as combine harvesters, tillers, rice transplanters as the movable objects 110; however, application of the above-disclosed technology is not limited to them and is also applicable to construction travel work machines such as tractors, shovel cars, wheel loaders, and carriers, and to ships such as pleasure boat, fishing boat.

Further, in the above movable objects 110(1) to 110(n), a single control device 113 is provided for a single work unit 111; however, a plurality of control devices 113 may be provided for a single work unit 111.

Further, the electric device can be an electric device used in an electric power facility such as an electric power generator, instead of the above-described movable object.

The present invention is not limited to the embodiments described above, and can be implemented in various other forms. For that reason, such embodiments are merely illustrative in all respects, and should not be construed as limiting. The scope of the present invention is indicated by the scope of the claims, and is not bound in any way in the text of the above description. Furthermore, all variations and modifications falling within the equivalent scope of the claims are within the scope of the present invention.

This application claims priority based on Japanese Patent Application No. 2016-038929 filed on March 1, 2016 in Japan. The entire contents of the application is hereby incorporated by reference.

### Industrial applicability

The present invention relates to a terminal device and a software rewriting program for use in a software rewriting system configured to rewrite a software package of a control device, and is particularly suitable for application to improve the convenience at a time of rewriting the software package of a control device without a need of having the user to intentionally perform an operation of rewriting the software package every time the software package of the control device is to be rewritten.

### Reference Signs List

- 100: software rewriting system
- 110: movable object
- 111: work unit
- 113: control device
- 120: remote monitoring center
- 130: server
- 131: control unit
- 131a: processing unit
- 131b: memory device
- 132: wide area communication unit
- 133: storage unit
- 200: dedicated terminal device
- 210: control unit
- 210a: processing unit
- 210b: memory device
- 220: wide area communication unit
- 230: storage unit
- 240: short-range wireless communication unit
- 250: signal communication unit
- 260: power source control unit
- 300: general-use terminal device
- 310: control unit
- 310a: processing unit
- 310b: memory device
- 320: wide area communication unit
- 330: storage unit
- 340: short-range wireless communication unit
- 350: user interface unit
- BT: battery
- DB: updating software database
- DB1: model information management database
- DB2: updating software management database
- DB3: updating software storing database
- FW: software package of control device
- L1: power source connection line
- L2: power source connection line
- L3: power source connection line
- LN: short-range wireless communication network
- PP: software rewriting program
- Q1: transmission control unit
- Q2: rewriting control unit
- Q3: power source control unit
- Q4: reception control unit
- Q5: authentication control unit
- Q6: notification control unit
- SW: start switch
- WFW: updating software package
- WFWC: updating software code
- WN: wide area network

## Claims

1. A terminal device for use in a software rewriting system configured to rewrite a software package of a control device, wherein
an updating software package for updating the software package of the control device is transmitted to the control device, when a turn-off operation for powering off the control device is conducted.

2. The terminal device according to claim 1, wherein
the software package of the control device is rewritten with the updating software package having been transmitted to the control device.

3. The terminal device according to claim 1 or 2, wherein
even when the turn-off operation is conducted, a power source of the control device is maintained in an ON-state until the updating software package is transmitted to the control device, and the power of the control device is turned off upon completion of the transmission of the software package to the control device.

4. The terminal device according to any one of claims 1 to 3, comprising
a communication unit configured to perform communication with a server managing the software package of the control device, wherein
the updating software package is received from the server via the communication unit.

5. The terminal device according to claim 4, wherein
a digital certificate for the updating software package is received from the server by using the communication unit,
whether the updating software package is an authorized package is checked with the digital certificate, and notification informing a failure in rewriting the software package of the control device is transmitted to the server by using the communication unit, if the updating software package is determined as not to be authentic.

6. The terminal device according to claim 4 or 5, wherein
the digital certificate for the updating software package is received from the server by using the communication unit while the power source of the control device is in the ON-state, and
the digital certificate is deleted when the power of the control device is turned off.

7. The terminal device according to any one of claims 4 to 6, wherein
whether or not the software package of the control device updated by the updating software package operates properly is tested, and if the software package updated by the updating software package does not properly operate in the control device, notification informing a failure in rewriting the software package of the control device is transmitted to the server by using the communication unit.

8. The terminal device according to any one of claims 1 to 7, wherein
the control device is mounted in a movable object.

9. The terminal device according to claim 8, wherein
the terminal device is provided in one of the one or more movable objects,
the terminal device includes a short-range wireless communication unit configured to perform communication with at least one other movable object different from the movable object, via a short-range wireless communication network, and
when a turn-off operation for powering off the control device is conducted, the updating software package is transmitted to the control device of an own movable object and/or is transmitted to the at least one other movable object via the short-range wireless communication unit and the short-range wireless communication network.

10. The terminal device according to any one of claims 1 to 7, wherein:
the control device is mounted in an electric device;
the terminal device functions as a multi-function portable communication terminal device; and
the terminal device includes a short-range wireless communication unit configured to communicate with the electric device via a short-range wireless communication network,
the electric device being configured to transmit, to the terminal device, turn-off information which indicates that a turn-off operation for powering off the control device has taken place,
the terminal device being configured to transmit the updating software package to the electric device via the short-range wireless communication unit and the short-range wireless communication network, when the turn-off information is received from the electric device via the short-range wireless communication unit and the short-range wireless communication network.

11. A software rewriting program of a terminal device for use in a software rewriting system configured to rewrite a software package of a control device, wherein
the terminal device comprises a computer, and
the software rewriting program causes the computer to execute steps including a transmission control step of transmitting an updating software package for updating the software package of the control device, when a turn-off operation for powering off the control device is conducted.
